# EUROPÄISCHE PATENTSCHRIFT

(11) **EP 1 900 610 B1**
(45) Veröffentlichungstag und Bekanntmachung des Hinweises auf die Patenterteilung: **10.02.2010**
(21) Anmeldenummer: 07011529.0
(22) Anmeldetag: 13.06.2007
(51) Int. Cl.: B62D 13/00

(54) **Dolly-Achse**
Dolly axle
Axe de dolly

(30) Priorität: 15.09.2006 DE 102006044202
(43) Veröffentlichungstag der Anmeldung: 19.03.2008
(73) Patentinhaber: Fahrzeugwerk Bernard Krone GmbH, 48480 Spelle (DE)
(72) Erfinder: Krone, Bernhard, Dr., 48480 Spelle (DE); Evers, Heinz, 49733 Haren (DE)
(74) Vertreter: Pott, Ulrich

(56) Entgegenhaltungen:
- EP-B- 1 466 813
- WO-A-2004/098981
- DE-A1- 19 905 676
- DE-C- 646 443
- GB-A- 2 181 398
- US-A- 3 063 739
- US-A- 4 281 847
- US-A- 6 158 759

## Beschreibung

Die Erfindung betrifft eine Dolly-Achse mit einer an einem Rahmen um eine vertikale Achse drehbeweglich befestigten Zugdeichsel und einer auf der Oberseite des Rahmens angeordneten Sattelkuppel sowie zumindest einem Radsatz, der von die Schwenkbewegung der Zugdeichsel übertragenen Übertragungsmitteln lenkbar ist, wobei vorzugsweise als Übertragungsmittel zumindest ein Schaltlenker vorgesehen ist, mit dem die Schwenkbewegung der Zugdeichsel auf wenigstens einen auf den lenkbaren Radsatz wirkenden Lenkhebel übertragbar ist und insbesondere die Lage des Schaltlenkers durch angetriebene Stellmittel veränderbar ist.

Eine derartige Dolly-Achse ist aus der EP 1 466 813 B bekannt. Bei dieser Dolly-Achse sind als Übertragungsmittel einen Schaltlenker aufweisende Zwischenhebel vorgesehen, mit denen die Schwenkbewegung der Zugdeichsel auf Lenkhebel, die auf den lenkbaren Radsatz wirken, übertragen werden können. Die Lage der Zwischenhebel ist durch angetriebene Stellmittel veränderbar, so daß die sich bei Lenkbewegungen zwangsläufig ergebende Schwenkbewegung der Zugdeichsel dazu genutzt werden kann, über den Schaltlenker einen Lenkeinschlag eines lenkbaren Radsatzes einzuleiten.

Das Dokument WO 2004/098981 offenbart eine Dolly-Achse mit einer an einem Rahmen um eine vertikale Achse drehbeweglich befestigten Zugdeichsel und einer auf der Oberseite des Rahmens angeordneten Sattelkuppel sowie zumindest einem Radsatz, der von der Schwenkbewegung der Zugdeichsel übertragenen Übertragungsmitteln lenkbar ist, wobei als Übertragungsmittel Schaltlenker vorgesehen sind, mit denen die Schwenkbewegung der Zugdeichsel auf jeweils einen auf den lenkbaren Radsatz wirkenden Lenkhebel übertragbar ist, wobei an jedem, einem lenkbaren Radsatz zugeordneten Lenkhebel gelenkig ein jeweiliger Schaltlenker angreift.

Anstelle von aufwändigen und defektanfälligen Sensoren, motorischen Antrieben und Getriebe können bei dieser vorbekannten Dolly-Achse einfache mechanische Komponenten eingesetzt werden, wobei durch die Schwenkbewegung der Zugdeichsel ein Lenkwinkel vorgegeben ist, der von den Schaltlenkern entsprechend auf den lenkbaren Radsatz übertragen wird. Durch die Übertragung der Lenkbewegung der Zugdeichsel auf einen lenkbaren Radsatz kann der auf der Dolly-Achse aufliegende Anhänger in einem günstigen, von den Lenkbewegungen beeinflußten Radius um eine von der Zugmaschine gefahrene Kurve herumbewegt werden. Durch die Lenkung der Dolly-Achse sind insgesamt kleinere Wenderadien ermöglicht.

Durch eine Veränderung der Lage des Schaltlenkers wird die Geometrie der Übertragungsmittel verändert. Bei Lenkbewegungen ergeben sich in unterschiedlichen Stellpositionen des Schaltlenkers unterschiedlich starke Lenkbewegungen bei gleichem Einschlagwinkel der Zugdeichsel. In einer Schaltposition des Schaltlenkers können also beispielsweise bei niedrigen Rangiergeschwindigkeiten von der Zugdeichsel geringere Lenkbewegungen auf einen lenkbaren Radsatz übertragen werden, während in einer anderen Schaltposition des Schaltlenkers bei beispielsweise höheren Geschwindigkeiten die von der Zugdeichsel übertragenen Stellwege bei gleichem Winkel der Zugdeichsel größer sind. Bei der vorbekannten Dolly-Achse ist es daher möglich, mit kostengünstigen Stellelementen geschwindigkeitsabhängig unterschiedlich starke Lenkimpulse auf einen lenkbaren Radsatz zu übertragen.

Bei allen Vorteilen dieser vorbekannten Dolly-Achse ist allerdings zu beobachten, daß insbesondere bei sehr langen Fahrzeugkombinationen noch Schlingerbewegungen und ein Aufschaukeln der Fahrzeugkombination zu beobachten ist. Hier setzt die vorliegende Erfindung an, der die Aufgabe zugrunde liegt, bei Beibehaltung der Vorteile der vorgenannten Dolly-Achse das Lenkverhalten noch weiter zu verbessern.

Zur Lösung dieser Aufgabe zeichnet sich die Dolly-Achse der eingangs genannten Art durch die Merkmale des Anspruchs 1 aus.

Dadurch ist bei der Dolly-Achse eine Lenkgeometrie realisiert, bei der eine Lenkwinkelkorrektur durchgeführt werden kann, und zwar bevorzugt in Zusammenwirken mit einem Lenkungsdämpfer und einer drehbaren Sattelkuppel, die im weiteren noch näher vorgestellt werden. Dabei wird der Lenkwinkel der innen- und außenliegenden Räder an die real vorhandenen Winkel der Kurven bzw. Kreisfahrt angepaßt. Damit geht ein geringerer Reifenverschleiß sowie eine Rollwiderstandsminimierung einher. Dazu ist der Verstellhebel vorgesehen, an dem die Lenkhebel gelenkig angreifen, die ihrerseits gelenkig mit dem Schaltlenker verbunden sind. Aufgrund der dabei vorgesehenen Abstandsverhältnisse der Anlenkpunkte kann die entsprechende Lenkwinkelkorrektur durchgeführt werden. Dabei sind die Abstandsverhältnisse einstellbar und damit veränderbar.

In vorteilhafter Weise ist die Zugdeichsel über zumindest einen Dämpfer an dem Rahmen abstützbar. Damit ist eine Dolly-Achse zur Verfügung gestellt, bei der Schlingerbewegungen und auch ein Aufschaukeln der Fahrzeugkombination insgesamt wesentlich zu reduzieren sind. Der Dämpfer ist immer im Einsatz, so daß es auch bei unterschiedlichen Einschlagwinkeln der Zugdeichsel immer einen gedämpften Zustand der Zugdeichsel gibt. Vorzugsweise sind zwei Dämpfer vorgesehen, die jeweils in Fahrtrichtung rechts und links - bezogen auf die Mittelstellung der Zugdeichsel - an dieser einenends angreifen und sich anderenends am Rahmen abstützen.

Bevorzugtermaßen ist der jeweilige Dämpfer ein Bauteil, das eine Gewindestange, einen Mitnehmertopf, ein Gehäuse sowie eine innenliegende Feder aufweist, wobei die Gewindestange relativ zum Mitnehmertopf und dem Gehäuse sowie der Mitnehmertopf relativ zu dem Gehäuse beweglich sind. Damit lassen sich verschiedene Stellungen für die Zugdeichsel einnehmen, nämlich einmal eine Mittelstellung, in der keine Kraft aufgebaut ist, und jeweilige Endstellungen mit eingeschobenem Mitnehmertopf und eingezogener Gewindestange und einer jeweils ausgezogenen Position der Gewindestange bei innenseitige Verlagerung des Mitnehmertopfes mitsamt der Feder und selbstverständlich entsprechende Zwischenstellungen. In der Neutralstellung, also der Mittelstellung der Zugdeichsel, ist das Lager der Gewindestange unbelastet, wobei es in den jeweiligen Endstellungen zu einer Belastung an der Gewindestange in den entsprechenden Lagerstellen kommt, die etwaigen Schlingerbewegungen entgegenwirkt.

Des weiteren ist bevorzugterweise die Sattelplatte hinsichtlich ihrer Drehbewegung bzw. hinsichtlich ihrer Rotation begrenzt. Die Sattelplatte bzw. die Sattelkuppel ist drehbar gelagert, damit durch eine Reibung zwischen Sattelkuppel und Sattelauflieger geringe Reibungskräfte anfallen. Größere auftretende Reibungskräfte würden ein Aufschaukeln der Fahrzeugkombination bewirken. Durch eine vorgesehene Spurstange bzw. Lenkstange ist der Kupplungsvorgang ohne manuelle Eingriffe möglich. Dabei ist die Verwendung von Standardachsen möglich. In Kombination mit dem Lenkungsdämpfer und der drehbaren Sattelkuppel ist ein Aufschaukeln wirksam verhindert. Durch die Dämpfer, die beidseits der Zugdeichsel angreifen, ist auch eine Rückstellung der Zugdeichsel in die Neutralstellung möglich. Vorteilhafterweise ist ebenfalls noch ein Endanschlag an dem Rahmen vorgesehen, um die maximale Auslenkung der Zugdeichsel zu begrenzen.

Bevorzugterweise ist auch noch eine Rückfahrsperre vorgesehen, bei der über eine mit der Zugdeichsel verbindbare federbelastete Rückfahrsperrklaue die Zugdeichsel verriegelbar ist, und zwar in ihrer Neutralstellung. Diese Rückfahrsperre kann über einen Zylinder zu betätigen sein. Des weiteren kann vorgesehen sein, daß die Zugdeichsel höhenverstellbar mit dem Rahmen verbindbar ist, wozu eine Befestigungsanordnung mit übereinander angeordneten Befestigungslöchern vorgesehen ist.

Weitere vorteilhafte Ausgestaltungen der Erfindung ergeben sich aus weiteren Unteransprüchen, der nachfolgenden Beschreibung und der Zeichnung. In der Zeichnung zeigen:
- Fig. 1: Seitenansicht einer Dolly-Achse,
- Fig. 2: eine Draufsicht auf das Beispiel nach Fig. 1 in der Neutralstellung der Zugdeichsel,
- Fig. 3: eine Ansicht von oben auf das Beispiel nach Fig. 1 mit eingeschlagener Zugdeichsel;
- Fig. 4: einen Ausschnitt der Darstellung nach Fig. 2 ohne Darstellung von Dämpferelementen, aber mit Darstellung einer erfindungsgemäßen Lenkwinkelkorrektur,
- Fig. 5: eine zu Fig. 4 analoge Darstellung mit eingeschlagener Zugdeichsel,
- Fig. 6: in einer teilweise geschnittenen Querschnittsdarstellung ein Ausführungsbeispiel eines Dämpferelementes im ausgezogenen Zustand,
- Fig. 7: das Ausführungsbeispiel nach Fig. 6 in Neutralstellung der Zugdeichsel,
- Fig. 8: das Ausführungsbeispiel nach den Fig. 6 und 7 im eingeschobenen Zustand des Dämpfers,
- Fig. 9: eine Ansicht von vorne auf die Dolly-Achse mit eingerasteter Rückfahrsperrklaue, und
- Fig. 10: eine zu Fig. 9 analoge Darstellung mit entriegelter Rückfahrsperrklaue.

In der Zeichnung sind grundsätzlich gleichwirkende Teile mit übereinstimmenden Bezugsziffern bezeichnet.

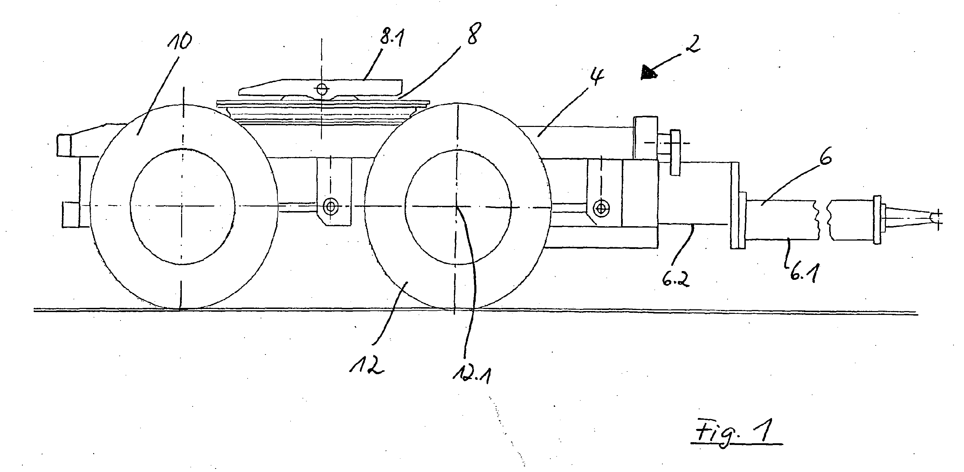

In Fig. 1 ist eine Seitenansicht einer Dolly-Achse 2 ersichtlich. Die Dolly-Achse 2 weist einen Rahmen 4, eine Zugdeichsel 6, eine Sattelkupplung 8, einen lenkbaren Radsatz 12 und einen nicht lenkbaren Radsatz 10 auf. Die Zugdeichsel 6 ist zweigeteilt ausgebildet und hat einen vorderen Zugdeichselteil 6.1 und einen hinteren, mit dem Rahmen 4 verbundenen Zugdeichselteil 6.2. Die Zugdeichsel 6 ist mit ihrem vorderen Ende an einer Anhängekupplung eines Zugfahrzeuges anhängbar. Die Form der Zugdeichsel ist nicht auf die im Beispiel gezeigte Ausführung beschränkt, sondern kann auch andere Formgestaltungen aufweisen, wie beispielsweise eine Schwanenhalsdeichsel. Ein Sattelaufliegeranhänger kann mit der Sattelkupplung 8 fest verbunden werden. Auf diese Weise ist es möglich, ein Gespann bzw. eine Fahrzeugkombination zu realisieren, dessen Gesamtlänge bis zu 25 Metern betragen kann. Neben dem Laderaum des Sattelaufliegeranhängers kann der entsprechende Lastzug über zusätzlichen Laderaum verfügen, der beispielsweise auf dem Zugfahrzeug angeordnet ist.

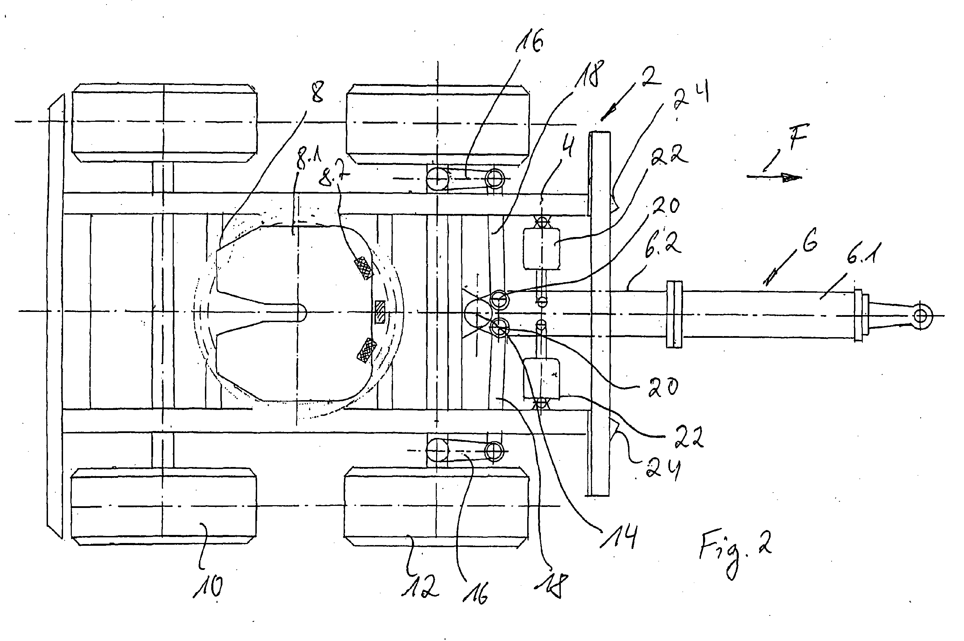

Die Zugdeichsel ist um eine Schwenkachse 14 schwenkbar, wie dies näher aus Fig. 2 hervorgeht. In dieser Fig. 2 ist die Dolly-Achse 2 aus einer Ansicht von oben zu sehen, und zwar in einer Stellung, in der sich für eine Geradeausfahrt die Zugdeichsel 6 mit ihrem vorderen Teil 6.1 und ihrem hinteren Teil 6.2 in ihrer Neutralstellung befindet. Durch die Zweiteiligkeit der Zugdeichsel ist die einfache Möglichkeit geschaffen, das Fahrzeug sowohl für Tief- als auch für Normalkuppelhöhen auszurüsten.

Die Sattelkupplung 8 ist etwa mittig zwischen dem lenkbaren Radsatz 12 und dem nicht lenkbaren Radsatz 10 angeordnet. Im Beispiel ist die Dolly-Achse 2 also als Zweiachsausführung gezeigt, kann aber auch als Einachs- oder mehr als zwei Achsen entsprechend ausgerüstet und eingesetzt werden.

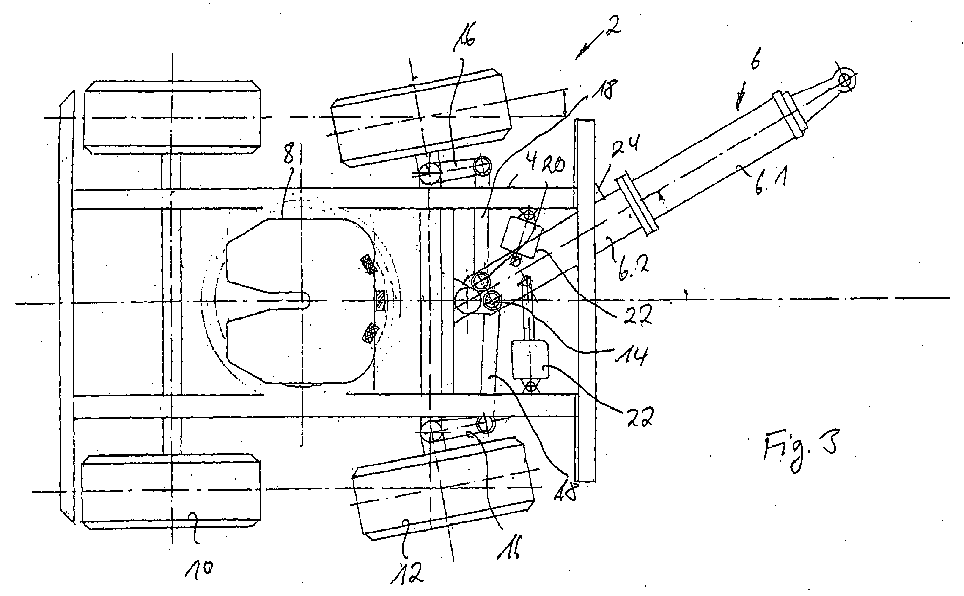

In den Fig. 2 und 3 sind die Lenkhebel 16 ersichtlich, an denen im einzelnen nicht gezeigte Übertragungsmittel angreifen. Diese sind beabstandet zur Drehachse des Lenkgelenks angeordnet, um einen Hebelweg für die Verstellung des Lenkeinschlages nutzen zu können. Die Übertragungsmittel bestehen im Beispiel aus einem Schaltlenker 18 bzw. einer Spurstange 18. Für jede Radseite ist ein entsprechender Schaltlenker 18 vorgesehen, der gelenkig bei 20 an der Zugdeichsel 6 angreift. Jeweils in Fahrtrichtung F den Schaltlenkern 18 vorgeordnet sind jeweils zwei Dämpfer 22, die einerseits gelenkig an dem Rahmen 4 und andererseits gelenkig an der Zugdeichsel 6 angreifen. Für die Zugdeichsel 6 ist am Rahmen 4 jeweils ein Endanschlag 24 vorgesehen. Diese Lenkdeichselanschläge 24 verhindern ein zu starkes Einlenken einer Fahrzeugkombination. Diese können auch so ausgerüstet werden, daß bei einem Anschlag der Zugdeichsel 6 an dem Anschlag 24 ein optisches oder akustisches Signal erzeugt wird für eine entsprechende Fahrerinformation.

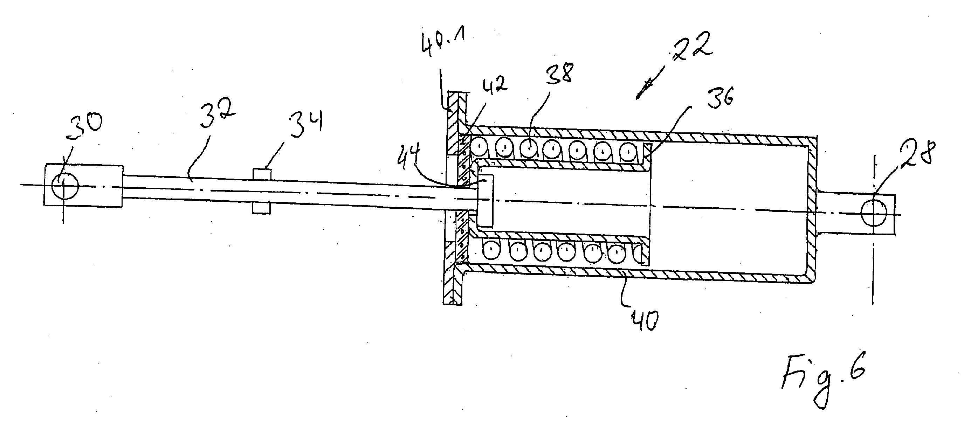

In Fig. 3 ist eine maximal eingeschlagene Zugdeichsel 6 bei ansonsten analogem Aufbau wie in dem Beispiel nach Fig. 2 veranschaulicht. Die Zugdeichsel 6 befindet sich am in der Zeichnung oberen Anschlag 24. Im gezeigten Beispiel entspricht dies einem Zugdeichselmaximalwinkel von 33°. Über den Lenkhebel 16 und den Schaltlenker 18 ist die Zugdeichselbewegung auf den lenkbaren Radsatz 12 übertragen worden. Die Zugdeichsel ist dabei gegen die an dieser angreifenden Dämpfer 22 bewegt worden, so daß der in Fig. 3 obere Dämpfer 22 eingefahren ist und der in der Fig. 3 untere Dämpfer 22 ausgefahren ist. Diese entsprechenden Dämpfstellungen sind in den Fig. 6, 7 und 8 näher veranschaulicht, worauf noch einzugehen ist.

Wie ebenfalls aus den Fig. 2 und 3 ersichtlich ist, hat die auf dem Rahmen 4 angeordnete Sattelkuppe 8 eine drehbare Sattelplatte 8.1, die mit Rotationsanschlägen 8.2 zusammenwirkt. Diese wirken als Endanschläge und minimieren die Reibung zwischen Sattelkupplung und einem Sattelauflieger. Dadurch wird ein Schlingern und Aufschaukeln der Fahrzeugkombination verhindert. Durch die Sattelkupplungsendanschläge 8.2 kann der Kuppelvorgang ohne manuellen Eingriff erfolgen, da der mögliche Verdrehwinkel so gewählt ist, daß beim Kuppeln von Sattelauflieger mit der Dolly-Achse die Zentrierhilfe der Sattelkupplung ohne manuellen Eingriff durch den Fahrer, z.B. durch ein Festsetzen der Sattelkupplung, den üblicherweise vorgesehenen Königszapfen korrekt führt und somit eine sichere und korrekte Verbindung hergestellt werden kann.

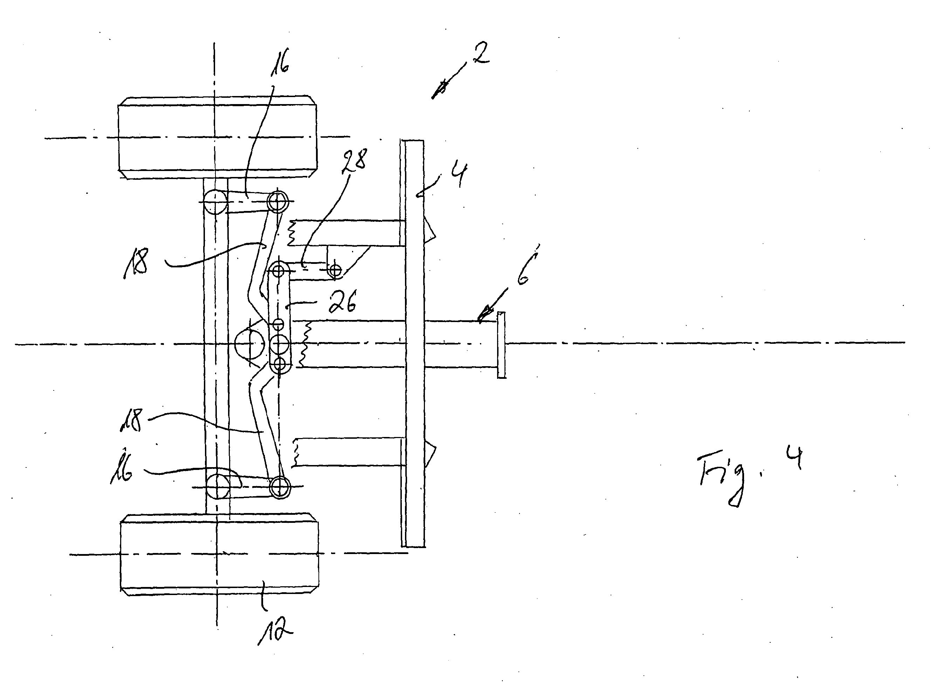

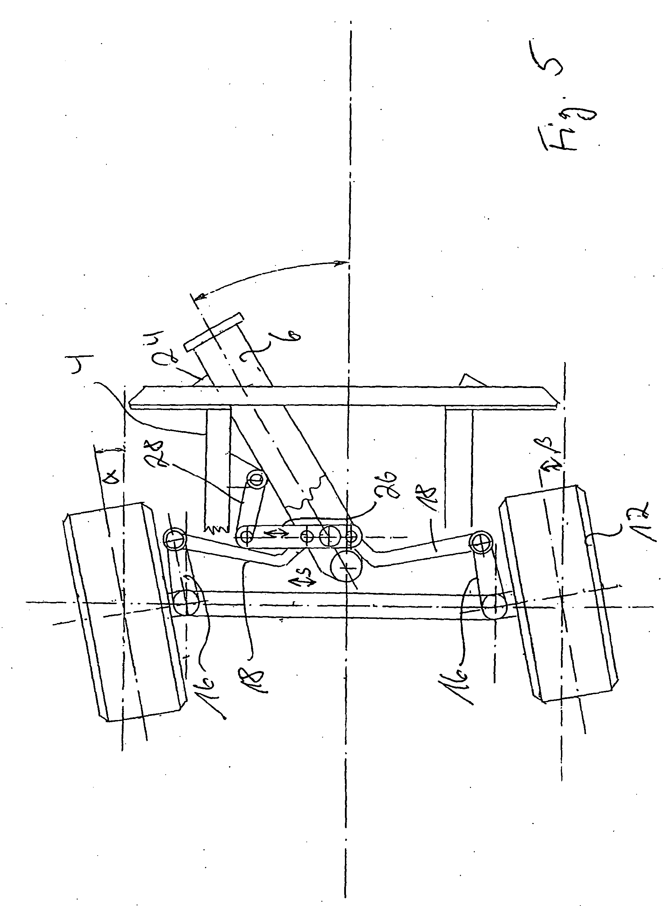

In Fig. 4 und 5 ist ausschnittsweise ein Ausführungsbeispiel der Erfindung dargestellt. Hier sind entsprechende Dämpfer nicht eingezeichnet, können und sollen aber bevorzugt dort vorgesehen werden. Zusätzlich ist hier eine Lenkgeometrie mit einer Lenkwinkelkorrektur dargestellt. Dazu ist der Schalthebel 18 bzw. die Spurstange 18 gelenkig mit einem Verstellhebel 26 verbunden, der wiederum gelenkig bei 26.1 mit der Zugdeichsel 6 und gelenkig bei 28.1 mit einem Lenkkorrekturhebel 28 verbunden ist, der seinerseits an dem Rahmen 4 angelenkt ist. Die Gelenkstellen 26.1 und 28.1 können verstellbar ausgebildet sein. In Fig. 4 ist die Neutralstellung der Zugdeichsel 6 dargestellt, wohingegen in Fig. 5 die Zugdeichsel am oberen Anschlag 24 liegt und sich in ihrer maximal verschwenkten Lage befindet. Bei der in Fig. 5 ersichtlichen Kurvenfahrt beträgt der obere Winkel α ca 10° und der unteren Winkel β ca 8°. Der Verstellhebel ist um ein Maß S von ca. 80 mm verstellbar, wodurch eine integrierte Lenkwinkelkorrektur von +/- 2° ermöglicht ist, um den Lenkwinkel der innen und außen liegenden Lenkwinkel an die Radien der Kurvenfahrt anzupassen. Dadurch ergibt sich ein geringerer Reifenverschleiß, ein geringerer Rollwiderstand, ein geringerer Verbrauch, eine geringere Belastung der Achsen und der Lenkeinrichtung z.B. in den Lagerstellen und der Spur- und Lenkstangen, wobei die Lenkwinkelkorrektur an Einsatzorte und an Einsatzgebiete anpaßbar ist. Dies ist durch die gewählte Lösung auf eine baulich sehr einfache Art realisiert.

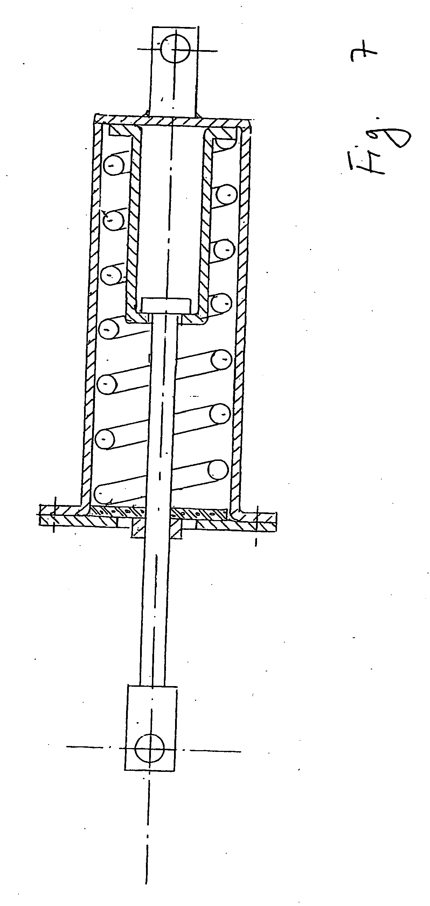

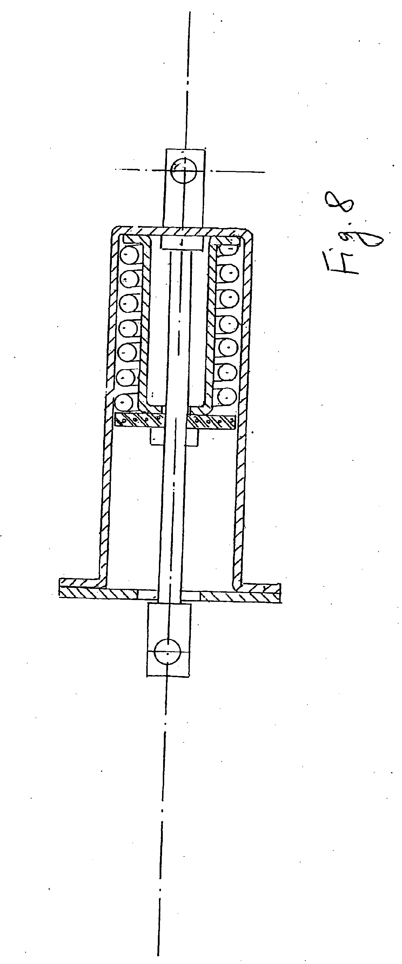

In den Fig. 6 bis 8 ist im einzelnen näher ein Beispiel eines Dämpfers 22 dargestellt. Fig. 6 zeigt den durch die Zugdeichselbewegung ausgezogenen Dämpfer. Dies entspricht der Stellung des in Fig. 3 unteren Dämpfers 22. Der Dämpfer 22 hat Lagerstellen 28 und 30 sowie eine Gewindestange 32 mit einer Mutter 34. Des weiteren ist ein Mitnehmertopf 36 vorgesehen, der von einer Feder 38 belastet werden kann, die sich ihrerseits in den umgebogenen Enden des Mitnehmertopfes 36 einenends abstützt. Dieser Mitnehmertopf mit der Feder 38 ist in dem Gehäuse 40 des Dämpfers geführt. Des weiteren durchsetzt die Gewindestange eine Mitnehmerscheibe 42, an der sich anderenends die Feder 38 abstützt. Die Mitnehmerscheibe 42 stützt sich ihrerseits an den umgebogenen Enden des Mitnehmertopfes 36 ab, an der sich ebenfalls innen das Kopfende 44 der Gewindestange 32 abstützt. Durch diesen Dämpfer sollen Schlingerbewegungen des Fahrzeuges verhindert werden. Bei einem Ausziehen der Gewindestange 22 baut der Dämpfer eine Kraft auf, die der Bewegungsrichtung der Zugdeichsel 6 entgegenwirkt. Ist der Dämpfer 22 in Neutralstellung, wie in Fig. 7 dargestellt, stützt sich der Mitnehmertopf 36 an der inneren rechten Wandung des Gehäuses 40 ab. Die Feder ist entspannt, so daß die Lagerstellen 28 und 30 unbelastet sind. In Fig. 8 ist die Gewindestange eingeschoben. Dies entspricht dem in Fig. 3 oberen Dämpfer 22 in der verschwenkten Zugdeichsellage.

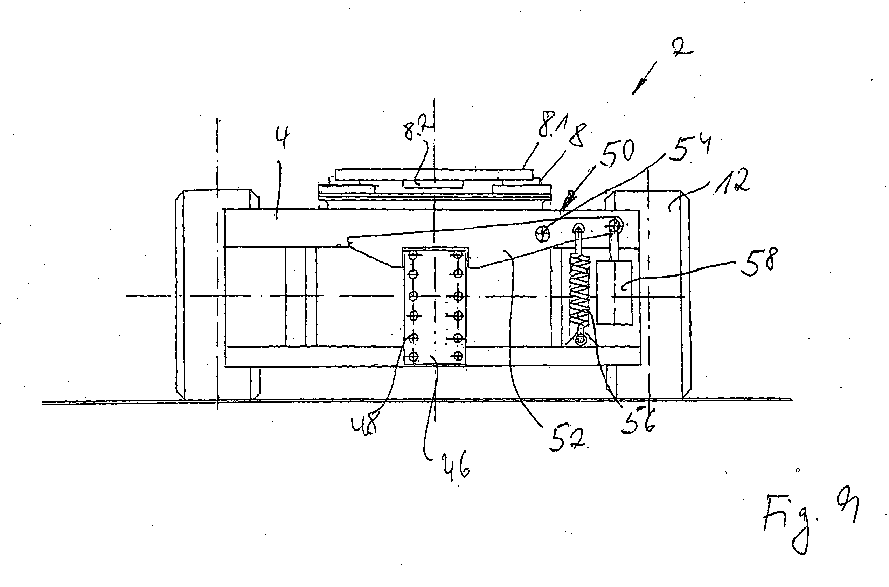

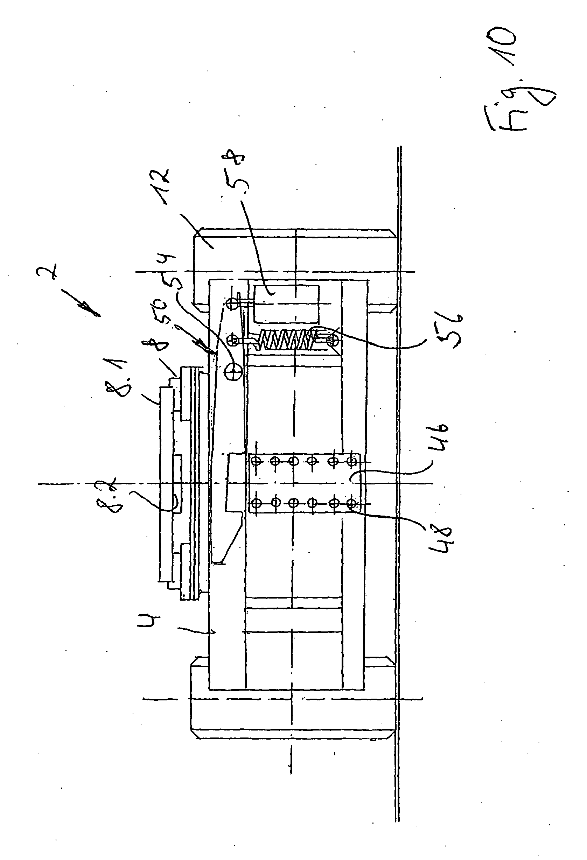

In den Fig. 9 und 10 ist die Dolly-Achse ohne Zugdeichsel in einer Ansicht von vorn dargestellt. In dieser Darstellung ist ersichtlich, daß die Dolly-Achse derart auszurüsten ist, daß die Zugdeichsel höhenveränderbar an dem Rahmen zu befestigen ist. Dazu ist ein Zugdeichselbock 46 vorgesehen, dem übereinander in paarweiser Zuordnung Löcher 48 zur Anbindung der Zugdeichsel - nicht dargestellt - in verschiedenen Höhenlagen aufweist. Dieser Zugdeichselbock 46 ist des weiteren Bestandteil einer Rückfahrsperre, die allgemein mit 50 beziffert ist. Diese Rückfahrsperre 50 weist eine verschwenkbare Rückfahrsperrklaue 52 auf, die bei 54 gelagert und von einer Feder 56 belastet ist. Über einen Pneumatikzylinder 58 ist diese in die in Fig. 9 gezeigte Verrastungsstellung zu bringen, in der die Rückfahrsperrklaue 52 den Zugdeichselbock 46 mit ihrem Maul übergreift und mithin den Zugdeichselbock 46 an einer Schwenkbewegung hindert. Damit ist die Zugdeichsel in ihrer Geradeaus- bzw. Neutralstellung zu halten. Nach entsprechender Entlastung des Pneumatikzylinders 58 ist über die Feder 56 die Rückfahrsperrklaue in ihre in Fig. 10 ersichtliche Entriegelungsstellung zu bewegen.

## Patentansprüche

1. Dolly-Achse (2) mit einer an einem Rahmen (4) um eine vertikale Achse (14) drehbeweglich befestigten Zugdeichsel (6) und einer auf der Oberseite des Rahmens (4) angeordneten Sattelkuppel (8) sowie zumindest einem Radsatz (12), der von der Schwenkbewegung der Zugdeichsel (6) übertragenen Übertragungsmitteln lenkbar ist, wobei als Übertragungsmittel Schaltlenker (18) vorgesehen sind, mit denen die Schwenkbewegung der Zugdeichsel (6) auf jeweils einen auf den lenkbaren Radsatz (12) wirkenden Lenkhebel (16) übertragbar ist, wobei an jedem, einem lenkbaren Radsatz (12) zugeordneten Lenkhebel (16) gelenkig ein jeweiliger Schaltlenker (18) angreift, der jeweils gelenkig mit einem Verstellhebel (26) verbunden ist, der seinerseits zur Anpassung des Lenkwinkels der innen und außen liegenden Räder des lenkbaren Radsatzes (12) an die real vorhandenen Winkel der Kurven oder Kreisfahrt über einen Lenkkorrekturhebel (28) verstellbar ist.

2. Dolly-Achse nach Anspruch 1, **dadurch gekennzeichnet, daß** der Verstellhebel (26) lageveränderlich an der Zugdeichsel (6) schwenkbeweglich festlegbar ist.

3. Dolly-Achse nach Anspruch 1 oder Anspruch 2, **dadurch gekennzeichnet, daß** der Verstellhebel (26) und der Lenkkorrekturhebel (28) lageveränderlich aneinander festlegbar sind.

4. Dolly-Achse nach einem der Ansprüche 1 bis 3, **dadurch gekennzeichnet, daß** die Zugdeichsel (6) über zumindest einen Dämpfer (22) an dem Rahmen (4) abstützbar ist.

5. Dolly-Achse nach einem der Ansprüche 1 bis 4, **dadurch gekennzeichnet, daß** an der Zugdeichsel (6) zwei Dämpfer (22) angreifen.

6. Dolly-Achse nach einem der Ansprüche 1 bis 5, **dadurch gekennzeichnet, daß** die Dämpfer (22) koaxial ausgerichtet sind.

7. Dolly-Achse nach einem der Ansprüche 1 bis 6, **dadurch gekennzeichnet, daß** als Dämpfer (22) ein hydraulisch oder pneumatisch arbeitendes Dämpferelement vorgesehen ist.

8. Dolly-Achse nach einem der Ansprüche 1 bis 7, **dadurch gekennzeichnet, daß** der Dämpfer (22) einen federbelasteten Mitnehmertopf (36) aufweist, in den ein mit der Zugdeichsel (6) verbindbarer Mitnehmer eingreift.

9. Dolly-Achse nach Anspruch 8, **dadurch gekennzeichnet, daß** der Mitnehmer stangenförmig ausgebildet ist.

10. Dolly-Achse nach Anspruch 9, **dadurch gekennzeichnet, daß** der Mitnehmer als Gewindestange (32) ausgebildet ist.

11. Dolly-Achse nach einem der Ansprüche 1 bis 10, **dadurch gekennzeichnet, daß** der Dämpfer (22) eine Mitnehmerscheibe (44) aufweist, die am Dämpferdeckel (40.1) einenends abstützbar ist.

12. Dolly-Achse nach einem der Ansprüche 1 bis 11 **dadurch gekennzeichnet, daß** der Dämpfer (22) ein Gehäuse (40) aufweist, an dem innenseitig ein relativ zu diesem bewegbarer Mitnehmertopf (36) und ein relativ zu diesem bewegbarer, an der Zugdeichsel (6) befestigbarer Mitnehmer abstützbar sind.

13. Dolly-Achse nach einem der Ansprüche 1 bis 12, **dadurch gekennzeichnet, daß** die auf dem Rahmen (4) angeordnete Sattelkuppe (8) eine drehbar gelagerte Sattelplatte (8.1) mit integrierten Rotatiohsanschlägen (8.2) aufweist.

14. Dolly-Achse nach einem der Ansprüche 1 bis 13, **dadurch gekennzeichnet, daß** die Zugdeichsel (6) zumindest zweiteilig ausgebildet ist und die Dämpfer (22) an dem rahmenseitigen Teil (6.2) der Zugdeichsel (6) angreifen.

15. Dolly-Achse nach einem der Ansprüche 1 bis 14, **dadurch gekennzeichnet, daß** für die Zugdeichsel (6) Zugdeichselanschläge (24) vorgesehen sind.

16. Dolly-Achse nach Anspruch 15, **dadurch gekennzeichnet, daß** die Zugdeichselanschläge (24) an dem Rahmen (4) befestigt sind.

17. Dolly-Achse nach einem der Ansprüche 1 bis 16, **dadurch gekennzeichnet, daß** eine Rückfahrsperre (50) vorgesehen ist.

18. Dolly-Achse nach Anspruch 17, **dadurch gekennzeichnet, daß** die Rückfahrsperre (56) eine mit der Zugdeichsel (6) verbindbare federbelastete Rückfahrsperrklaue (52) aufweist, die mit der Zugdeichsel (6) verriegelbar und entriegelbar ist.

19. Dolly-Achse nach Anspruch 17 oder 18, **dadurch gekennzeichnet, daß** die Rückfahrsperre (50) über einen Zylinder (58) betätigbar ist.

20. Dolly-Achse nach Anspruch 19, **dadurch gekennzeichnet, daß** der Zylinder (58) als einfach wirkender Pneumatikzylinder ausgebildet ist.

21. Dolly-Achse nach einem der Ansprüche 1 bis 20, **dadurch gekennzeichnet, daß** die Zugdeichsel (6) höhenverstellbar mit dem Rahmen verbindbar ist.

22. Dolly-Achse nach Anspruch 21, **dadurch gekennzeichnet, daß** die Zugdeichsel (6) an einem in unterschiedlichen Höhenlagen vorgesehene Löcher (48) aufweisenden Zugdeichselbock (46) befestigbar ist.

## Claims

1. Dolly axle (2) having a tow bar (6) which is fastened to a frame (4) to be movable in rotation about a vertical axis (14) and having a fifth wheel coupling (8) which is arranged on the upper side of the frame (4) and also having at least one wheel set (12) which is steerable by transmitting means which transmit the pivoting movement of the tow bar (6), what are provided as transmitting means being variable-position links (18) by which the pivoting movement of the tow bar (6) can be transmitted to respective ones of steering arms (16) acting on the steerable wheel set (12), there engaging, via a joint, with a respective steering arm (16) associated with a steerable wheel set (12), a variable-position link (18) which is connected, by a joint, to an adjusting lever (26), which in turn can be adjusted by means of a steering correcting arm (28) to match the steering angle of the wheels of the steerable wheel set (12) which are situated on the inside and outside to the actual angle of bends or turns or circles which are driven through.

2. Dolly axle according to claim 1, **characterised in that** the adjusting lever (26) can be fastened to the tow bar (6), to be movable by pivoting, in such a way that its position can be changed.

3. Dolly axle according to claim 1 or claim 2, **characterised in that** the adjusting lever (26) and the steering correcting arm (28) are fastened to one another in such way that their positions can be changed.

4. Dolly axle according to one of claims 1 to 3, **characterised in that** the tow bar (6) can be supported on the frame (4) via at least one damper (22).

5. Dolly axle according to one of claims 1 to 4, **characterised in that** two dampers (22) engage with the tow bar (6).

6. Dolly axle according to one of claims 1 to 5, **characterised in that** the dampers (22) are co-axially aligned.

7. Dolly axle according to one of claims 1 to 6, **characterised in that** a hydraulically or pneumatically acting damping member is provided as a damper (22).

8. Dolly axle according to one of claims 1 to 7, **characterised in that** the damper (22) has a spring-loaded entraining cup (36) in which an entraining member able to be connected to the tow bar (6) engages.

9. Dolly axle according to claim 8, **characterised in that** the entraining member is in the form of a rod.

10. Dolly axle according to claim 9, **characterised in that** the entraining member is in the form of a threaded rod (32).

11. Dolly axle according to one of claims 1 to 10, **characterised in that** the damper (22) has an entraining disc (44) which can be supported at one end against the cover (40.1) of the damper.

12. Dolly axle according to one of claims 1 to 11, **characterised in that** the damper (22) has a body (40) against which, on the inside, an entraining cup (36) able to be moved relative to the said body (40) and an entraining member which is able to be moved relative to the said entraining cup (36) and which can be fastened to the tow bar (6) can be supported.

13. Dolly axle according to one of claims 1 to 12, **characterised in that** the fifth wheel coupling (8) arranged on the frame (4) has a top plate (8.1), having built-in stops for rotation (8.2), which is mounted to be rotatable.

14. Dolly axle according to one of claims 1 to 13, **characterised in that** the tow bar (6) is in at least two parts and the dampers (22) engage with that part (6.2) of the tow bar (6) which is at the frame end.

15. Dolly axle according to one of claims 1 to 14, **characterised in that** tow bar stops (24) are provided for the tow bar (6).

16. Dolly axle according to claim 15, **characterised in that** the tow bar stops (24) are fastened to the frame (4).

17. Dolly axle according to one of claims 1 to 16, **characterised in that** a lock for reversing (50) is provided.

18. Dolly axle according to claim 17, **characterised in that** the lock for reversing (56) has a spring loading locking claw (52) for reversing which can be connected to the tow bar (6) and which can be locked to and unlocked from the tow bar (6).

19. Dolly axle according to claim 17 or 18, **characterised in that** the lock for reversing (50) can be actuated by means of a cylinder (58).

20. Dolly axle according to claim 19, **characterised in that** the cylinder (58) takes the form of a single-acting pneumatic cylinder.

21. Dolly axle according to one of claims 1 to 20, **characterised in that** the tow bar (6) can be connected to the frame in such a way that it can be adjusted in the heightwise direction.

22. Dolly axle according to claim 21, **characterised in that** the tow bar (6) can be fastened to a tow bar plate (46) having holes (48) provided at different heights.

## Revendications

1. Essieu Dolly (2) avec un timon (6) fixé de manière mobile en rotation autour d'un axe vertical (14) sur un châssis (4) et une sellette d'attelage (8) agencée sur la face supérieure du châssis (4) ainsi qu'au moins un essieu monté (12), qui peut être orienté par des moyens de transmission transmettant le mouvement de pivotement du timon (6), dans lequel des bielles de commande de direction (18) sont prévues comme moyens de transmission, avec lesquelles le mouvement de pivotement du timon (6) peut être transmis à respectivement un levier de direction (16) agissant sur l'essieu monté (12) orientable, dans lequel une bielle de commande de direction (18) respective s'applique de manière articulée contre chaque levier de direction (16) affecté à un essieu monté (12) orientable, laquelle bielle est reliée respectivement de manière articulée à un levier de réglage (26), qui peut être déplacé de son côté pour adapter l'angle de braquage des roues situées à l'intérieur et à l'extérieur de l'essieu monté (12) orientable aux angles réels des virages ou de la trajectoire circulaire par le biais d'un levier de correction de direction (28).

2. Essieu Dolly selon la revendication 1, **caractérisé en ce que** le levier de réglage (26) peut être fixé de manière déplaçable et pivotante sur le timon (6).

3. Essieu Dolly selon la revendication 1 ou la revendication 2, **caractérisé en ce que** levier de réglage (26) et le levier de correction de direction (28) peuvent être fixés l'un contre l'autre de manière déplaçable.

4. Essieu Dolly selon l'une quelconque des revendications 1 à 3, **caractérisé en ce que** le timon (6) peut être supporté au niveau du châssis (4) par le biais d'au moins un amortisseur (22).

5. Essieu Dolly selon l'une quelconque des revendications 1 à 4, **caractérisé en ce que** deux amortisseurs (22) s'appliquent contre le timon (6).

6. Essieu Dolly selon l'une quelconque des revendications 1 à 5, **caractérisé en ce que** les amortisseurs (22) sont orientés de manière coaxiale.

7. Essieu Dolly selon l'une quelconque des revendications 1 à 6, **caractérisé en ce qu'**un élément amortisseur à fonctionnement hydraulique ou pneumatique est prévu comme amortisseur (22).

8. Essieu Dolly selon l'une quelconque des revendications 1 à 7, **caractérisé en ce que** l'amortisseur (22) présente un pot d'entraînement (36) sollicité par ressort, dans lequel s'engage un entraîneur pouvant être relié au timon (6).

9. Essieu Dolly selon la revendication 8, **caractérisé en ce que** l'entraîneur est réalisé sous forme de tige.

10. Essieu Dolly selon la revendication 9, **caractérisé en ce que** l'entraîneur est réalisé sous forme de tige filetée (32).

11. Essieu Dolly selon l'une quelconque des revendications 1 à 10, **caractérisé en ce que** l'amortisseur (22) présente un disque d'entraînement (44) qui peut être supporté d'un côté au niveau du couvercle de l'amortisseur (40.1).

12. Essieu Dolly selon l'une quelconque des revendications 1 à 11, **caractérisé en ce que** l'amortisseur (22) présente un boîtier (40), au niveau duquel un pot d'entraînement (36) mobile par rapport à celui-ci et un entraîneur mobile par rapport à celui-ci et pouvant être fixé au niveau du timon (6), peuvent être supportés côté intérieur.

13. Essieu Dolly selon l'une quelconque des revendications 1 à 12, **caractérisé en ce que** la sellette d'attelage (8) agencée sur le châssis (4) présente une plaque d'attelage (8.1) logée de manière rotative avec des butées de rotation intégrées (8.2).

14. Essieu Dolly selon l'une quelconque des revendications 1 à 13, **caractérisé en ce que** le timon (6) est réalisé au moins en deux parties et les amortisseurs (22) s'appliquent contre la partie côté châssis (6.2) du timon (6).

15. Essieu Dolly selon l'une quelconque des revendications 1 à 14, **caractérisé en ce que** des butées de timon (24) sont prévues pour le timon (6).

16. Essieu Dolly selon la revendication 15, **caractérisé en ce que** les butées de timon (24) sont fixées sur le châssis (4).

17. Essieu Dolly selon l'une quelconque des revendications 1 à 16, **caractérisé en ce qu'**un blocage de marche arrière (50) est prévu.

18. Essieu Dolly selon la revendication 17, **caractérisé en ce que** le blocage de marche arrière (56) présente une mâchoire de blocage de marche arrière (52) sollicitée par ressort pouvant être reliée au timon (6), qui peut être verrouillée et déverrouillée avec le timon (6).

19. Essieu Dolly selon la revendication 17 ou 18, **caractérisé en ce que** le blocage de marche arrière (50) peut être actionné par le biais d'un vérin (58).

20. Essieu Dolly selon la revendication 19, **caractérisé en ce que** le vérin (58) est réalisé sous forme de vérin pneumatique à action simple.

21. Essieu Dolly selon l'une quelconque des revendications 1 à 20, **caractérisé en ce que** le timon (6) peut être relié au châssis de manière réglable en hauteur.

22. Essieu Dolly selon la revendication 21, **caractérisé en ce que** le timon (6) peut être fixé au niveau d'un bloc timon (46) présentant des trous (48) prévus à différentes hauteurs.
